# EUROPÄISCHE PATENTSCHRIFT

(11) **EP 0 700 009 B1**
(45) Veröffentlichungstag und Bekanntmachung des Hinweises auf die Patenterteilung: **21.03.2001**
(21) Anmeldenummer: 95500123.5
(22) Anmeldetag: 28.08.1995
(51) Int. Cl.: G06F 17/60, G07C 5/08

(54) **Verfahren und Vorrichtung zur individuellen Bewertung des Fahrzeugrisikos**
Method and system for individual evaluation of motor vehicle risk
Procédé et système d'évaluation individuelle du risque véhicule automobile

(30) Priorität: 01.09.1994 ES 9401925
(43) Veröffentlichungstag der Anmeldung: 06.03.1996
(73) Patentinhaber: Minguijon Perez, Salvador, 50005 Zaragoza (ES)
(72) Erfinder: Minguijon Perez, Salvador, 50005 Zaragoza (ES)
(74) Vertreter: Ungria Lopez, Javier

(56) Entgegenhaltungen:
- WO-A-90/02388
- BE-A- 1 000 765
- FR-A- 2 533 049
- FR-A- 2 647 930
- US-A- 5 046 007

## Beschreibung

### Technisches Gebiet

Das patentgemäße Verfahren gehört in den Bereich Elektronik, Informatik und Datenaustauschtechnik und zeigt Möglichkeiten zur ergänzenden oder alternativen Beitragskalkulation der Versicherung des jeweiligen Versicherungsnehmers auf, und es wird eine Einrichtung zum Durchführen des Verfahrens angegeben.

### Stand der Technik

In den letzten Jahren haben elektronische Prozessoren oder Rechner für die verschiedensten Anwendungen auf dem Fahrzeugsektor Einzug gehalten, z. B. für Steuerungs- oder Regelsysteme, Verkehrsleitsysteme für die Kommunikation mit Fahrbahn-Signaleinrichtungen, für die Aufzeichnung von Unfallabläufen (black box), für die Durchführung von Funktionsdiagnosen, oder für die Überwachung von Wartungsintervallen usw.

Ein Verfahren, das dem Preämbel vom Anspruch 1 entspricht, ist aus FR 2 533 049 bekannt.

Ungeachtet ihrer vielseitigen Anwendungsmöglichkeiten sind der Verwendung derartiger Einrichtungen enge Grenzen gesetzt. Auf der einen Seite bedingen einige dieser Anwendungen einen sehr großen baulichen Aufwand, um den Benutzer zufriedenstellen zu können, wobei dieser Aufwand auf der anderen Seite zu groß ist, um die Verwendung solcher Systeme in Fahrzeugen der Mittelklasse noch zu rechtfertigen.

Zur Überwindung dieser Grenzen auf eine wirtschaftlich zu rechtfertigende Weise sieht die Erfindung vor, ein Kraftfahrzeug mit einem hoch leistungsfähigen Rechner in Verbindung mit einer Datenübertragungseinrichtung auszurüsten, um damit eine Grundlage für derzeit bekannte und in Zukunft zu erwartende Funktionen bereitzustellen.

Auf diese Weise schafft die Erfindung ein Produkt, welches im Zusammenwirken mit vorhandenen bzw, noch zu schaffenden Infrastrukturen in der Lage ist, gegenwärtigen und künftigen Anforderungen zu genügen und damit die Einführung eines derartigen Systems zu fördern.

Besondere Vorteile bietet die Erfindung im Dienstleistungssektor, insbesondere im Fahrzeugversicherungsgewerbe mit seinen komplizierten und oft unübersichtlichen Tarifstrukturen, welche die Beziehungen zwischen den Versicherern und ihren Kunden erheblich belasten können.

Aufgrund der Möglichkeit, die Betriebsrisiken für jedes Fahrzeug einzeln zu bewerten, ist zu erwarten, daß die Erfindung bei den wichtigsten beiden Zielgruppen, namentlich bei Kraftfahrzeughaltern und Versicherungsgesellschaften, bereitwillige Aufnahme und schnelle Verbreitung findet, zumal der zur Zeit gegebene Funktions- und Aufgabenbereich mittel- und langfristig beträchtliche Erweiterungsmöglichkeiten bietet.

### Erläuterung

Ein wesentliches Teil der erfindungsgemäßen Einrichtung ist ein elektronischer Prozessor, welcher in der Lage ist, die Betriebsparameter des Fahrzeugs betreffende Daten sowie externe Signale, z. B. aus dem Fahrbahnbereich, zu erfassen, die sich aus der Fahrweise ergebenden Risiken zu bewerten, dem Fahrer auf eine Minderung des Risikos gerichtete Anweisungen zu erteilen, und in zeitlichen Abständen mit einer Datenbasis zu kommunizieren, um sein Betriebsprogramm zu aktualisieren und die voraufgegangene Risikobewertung als Grundlage für die Beitragsberechnung durch die Versicherungsgesellschaft zu übermitteln.

Je nach der Genauigkeit, mit welcher die Risiken zu bewerten sind, können die zu erfassenden fahrzeugintemen Daten einen weiten Bereich umfassen. Von grundlegender Bedeutung sind dabei die Geschwindigkeit sowie verschiedene Beschleunigungen betreffende Daten, wel.che in Verbindung mit im Prozessor vorhandenen Uhr- und Kalenderfunktionen eine Erfassung der Fahrweise mit Bewertung des sich daraus ergebenden Risikos, der Dauer von einzelnen Fahrten und der Uhrzeit derselben ermöglichen.

Zusätzlich können noch weitere Daten erfaßt werden, betreffend z. B. die Benutzung von Sicherheitsgurten, den Reifendruck, den Abstand zu einem vorausfahrenden Fahrzeug usw..

Für die Erfassung von externen Signalen aus dem Fahrbahnbereich ist ein elektromagnetischer Sensor vorgesehen, welcher in der Lage ist, sowohl passiv auf von im Fahrbahnbereich angeordneten Einrichtungen erzeugte, z. B. dauernde Geschwindigkeitsbegrenzungen oder Baustellen anzeigende Signale anzusprechen als auch aktiv Signale zu erzeugen, welche z. B. Vereisung, Verkehrsstau od. dergl. anzeigen können. Dabei überwacht der Prozessor dann die Abstimmung des Fahrverhaltens mit derartigen Signalen. Es ist hier anzumerken, daß die aktive Signalerzeugung nur einen minimalen Energieaufwand erfordert, wodurch das bei vorhandenen aktiven Signaleinrichtungen bestehende Problem von kostenaufwendigen elektrischen Anlagen beseitigt ist.

Der Datenaustausch mit dem Datennetz erfolgt im Bereich von Tankstellen und dergl. durch drahtlose Übermittlung. Dabei werden die gemäß den Vorgaben der Versicherung bis dahin erfaßten und gespeicherten, der Bewertung des Betriebsrisikos über eine gegebene Zeitspanne dienenden Daten an das Netz übermittelt und stehen so der Versicherungsgesellschaft für die Berechnung des Beitrags sowie für die Erstellung von Statistiken für die Optimierung der Risikobewertung zur Verfügung. Außerdem können an das Fahrzeug die Daten eines aktualisierten Risikobewertungsprogramms übermittels werden, so daß die Funktionen des Prozessors jeweils dem neuesten Erkenntnisstand entsprechen.

Selbstverständlich ist die Anlage auch dazu bestimmt, dem Fahrer Informationen über zur Verringerung des Risikos zu ergreifende Maßnahmen zu übermitteln, beispielsweise "Verringerung der Geschwindigkeit", "Ruhepause einlegen" usw. Zusätzlich könnte die Anlage eine Identifizierung des Fahrers, einen Alkoholtest und/oder eine Reflexuntersuchung verlangen.

Im Rahmen des vorgesehenen Datenaustauschs mit dem Datennetz können auch Wartungsdaten von oder an Spezialwerkstätten übermittelt werden, so daß der Prozessor dann den Zustand einzelner Sicherheitseinrichtungen überwachen und Hinweise für deren Wartung ausgeben könnte.

Wie eingangs im Hinblick auf den Stand der Technik erwähnt, gibt es bereits zahlreiche Vorschläge für die Verwendung von Rechnern und Kommunikationseinrichtungen in Kraftfahrzeugen, welche zwar technisch durchführbar sind, für ihre eine gewisse Rentabilität gewährleistende Verbreitung jedoch die Schaffung einer umfangreichen Infrastruktur voraussetzen.

Demgegenüber weist das vorstehend beschriebene System die Besonderheit auf, daß es in zwei getrennte Bereiche aufgeteil werden kann, welche jeweils von Unternehmen bearbeitet werden können, die bereits über eine gewisse Infrastruktur auf dem Markt verfügen. So ist im einzelnen vorgesehen, daß ein Dienstleistungsunternehmen für den Informationsfluß und alles damit Zusammenhängende zuständig ist, während die fahrzeug- und geräteseitigen Aufgaben von einer Elektronikfirma wahrgenommen werden.

## Patentansprüche

1. Verfahren für die Bewertung des Betriebsrisikos einzelner Kraftfahrzeuge als Grundlage für die Berechnung der Versicherungsbeiträge einzelner Versicherungsnehmer durch ein Versicherungsunternehmen in Abhängigkeit von den von einem jeweiligen Versicherungsnehmer eingegangenen Risiken, zu dessen Durchführung das einzelne Fahrzeug mit Einrichtungen für die Erfassung und Vorverarbeitung von aus dem Fahrzeug selbst und aus seiner Umgebung zufließenden Daten versehen ist und diese Daten gesammelt und verarbeitet werden, um die über eine gegebene Zeitspanne eingegangenen Risiken zu bewerten und den fälligen Versicherungsbeitrag in Abhängigkeit vom Risiko zu berechnen,
dadurch gekennzeichnet,
a) daß man eine Anordnung von Beschleunigungsmessern zum Erfassen von Daten hezüglich Beschleunigungen des Fahrzeugs in allen drei Dimensionen verwendet,
b) daß man die Geschwindigkeit des Fahrzeugs mittels eines Geschwindigkeitssensors erfaßt,
c) daß man die erfaßten Beschleunigungs- und Geschwindigkeitsdaten zusammen mit aus einer internen Uhr- und Kalenderfunktion des Informationssystems erhaltenen Daten analysiert, um das Risiko anhand der praktizierten Fahrweise, der Dauer und der Uhr- bzw, Tageszeit der Fahrten zu erfassen und zu bewerten, und
d) daß die erfaßten und gesammelten Daten an ein externes System übermittelt werden und zur gleichen Zeit das im Fahrzeug gespeicherte Programm aktualisiert wird.

2. Verfahren nach Anspruch 1, dadurch gekennzeichnet, daß man wenigstens eines der folgenden Daten erfaßt:
e1) Benutzung des Sicherheitsgurte;
e2) Reifendruck;
e3) Abstand zum vorausfahrenden Fahrzeug;
e4) die Zeitspanne, während welcher das Fahrzeug in Betrieb ist bzw. war;
e5) feste Geschwindigkeitsbegrenzungen;
e6) Baustellen-Wamanzeigen; e7) Auftreten von Vereisung;
e8) Verkehrsstau;
e9) Anzahl der besetzten Sitzplätze;
e10) Gesamtgewicht des Fahrzeugs;
e11) Zustand der aktiven Sicherheitssysteme des Fahrzeugs; e12) Wartungszustand des Fahrzeugs.

3. Verfahren nach einem der vorstehenden Ansprüche, dadurch gekennzeichnet, daß ein Alkoholtest und/oder eine Reflexprüfung verlangt wird bzw. werden.

4. Verfahren nach einem der vorstehenden Ansprüche, gekennzeichnet durch die Verwendung von Einrichtungen, welche eine Kommunikation in beiden Richtungen zwischen dem Informatinssystem des Fahrzeugs und dem Fahrer desselben ermöglichen, so daß das Informationssystem den Fahrer vor erkanten Gefahren warnen kann und das Informationssystem vom Fahrer mit Daten, z.B. bezüglich seiner Identität, gespeist werden kann.

5. Verfahren nach einem der vorstehenden Ansprüche, dadurch gekennzeichnet, daß man einen Datenaustausch mit Wartungseinrichtungen für das Fahrzeug vorsieht.

6. Verfahren nach einem der vorstehenden Ansprüche, dadurch gekennzeichnet, daß im Bereich von Tankstellen, Wartungsstationen od. dergl. ein drahtloser Datenaustausch zwischen dem Informationssystem des Fahrzeugs und einem externen System in für den Benutzer erkennbarer Form stattfindet.

7. Verfahren nach einem der vorstehenden Ansprüche, dadurch gekennzeichnet, daß eine elektromagnetische Kommu nikation mit aktiven und passiven Signaleinrichtungen im Fahrbahnbereich stattfindet, so daß bei der Bewertung des Risikos die Anpassung der Fahrweise an Signale solcher Signaleinrichtungen berücksichtigt werden kann.

8. Elektronische Einrichtung für die Bewertung des Betriebsrisikos einzelner Kraftfahrzeuge, mit einem Datenaustauschnetz für den Informationsaustausch zwischen einem Zentralsystem und einem im jeweiligen Fahrzeug angeordneten Terminal, welches zu einem Informationssystem für die Erfassung und Vorverarbeitung von aus dem Fahrzeug selbst und aus seiner Umgebung zufließenden Informationen zur Berechnung des über eine gegebene Zeitspanne eingegangenen Risikos als Grundlage für die Kalkulation eines Versicherungsbeitrags in Abhängigkeit vom Risiko gehört,
dadurch gekennzeichnet,
daß die elektronische Einrichtung
a') eine Anordnung von Beschleunigungsmessern zum Erfassen von Daten bezüglich Beschleunigungen des Fahrzeugs in allen drei Dimensionen,
b') einen Sensor zum Erfassen der Geschwindigkeit des Fahrzeugs,
c') Einrichtungen zum Analysieren der erfaßten Beschleunigungs- und Geschwindigkeitswerte in Verbindung mit aus einer internen Uhr- und Kalenderfunktion des Informationssystems erhaltenen Daten für die Erfassung und Bewertung des Risikos aufgrund der praktizierten Fahrweise, der Dauer und der Uhr- bzw. Tageszeit der ausgeführten Fahrten, und
d') Kommunikationseinrichtungen umfaßt, welche derart angeordnet und ausgebildet sind, daß damit die Übermittlung der gesammelten Daten an ein externes System und zur gleichen Zeit eine Aktualisierung des im Fahrzeug gepeicherten Programms durchführbar sind.

9. Elektronische Einrichtung nach Anspruch 8, dadurch gekennzeichnet daß sie Komponenten für die Erfassung wenigstens eines der folgenden Daten aufweist:
e1) Benutzung des Sicherheitsgurts;
e2) Reifendruck;
e3) Abstand zum vorausfahrenden Fahrzeug;
e4) Zeitspanne, über welche das Fahrzeug in Betrieb war; e5) feste Geschwindigkeitsbegrenzungen;
e6) Baustellen-Wamanzeigen; e7) Auftreten von Vereisung;
e8) Auftreten von Verkehrsstaus;
e9) Anzahl der besetzten Sitzplätze;
e10) Gesamtgewicht des Fahrzeugs;
e11) Zustand der aktiven Sicherheitssysteme des Fahrzeugs; e12) Wartungszustand des Fahrzeugs.

10. Elektronische Einrichtung nach Anspruch 8 und/oder 9, dadurch gekennzeichnet, daß sie Komponenten zum Verlagen eines Alkoholtests und/oder einer Reflexprüfung aufweist.

11. Elektronische Einrichtung nach einem der Ansprüche 8 bis 10, gekennzeichnet durch Komponenten für die wechselseitige Kommunikation zwischen dem Informationssystem des Fahrzeugs und dem Fahrer des Fahrzeugs, über welche eine Warnung vor erkannten Gefahren vom Informationssystem an den Fahrer abgebbar ist und Daten, z. B. bezüglich seiner Identität, vom Fahrer in das Informationssystem einspeisbar sind.

12. Elektronische Einrichtung nach einem der Ansprüche 8 bis 11, gekennzeichnet durch Komponenten für den Datenaustausch mit Wartungseinrichtungen für das Fahrzeug.

13. Elektronische Einrichtung nach einem der Ansprüche 8 bis 12, gekennzeichnet durch Komponenten für die drahtlose Kommunikation zwischen dem Informationssystem des Fahrzeugs und einem externen System.

14. Elektronische Einrichtung nach einem der Ansprüche 8 bis 13, gekennzeichnet durch Komponenten für die elektromagnetische Kommunikation mit aktiven und passiven Signaleinrichtungen im Fahrbahnbereich und damit für die Berücksichtigung der Anpassung der Fahrweise an von solchen Signaleinrichtungen empfangene Signale bei der Berechnung des Risikos.

15. Elektronische Einrichtung nach einem der Ansprüche 8 bis 14, dadurch gekennzeichnet, daß das Informationssystem des Fahrzeugs als Peripheriekomponenten für die Kommunikation mit dem Fahrer ein Anzeigefeld, eine Tastatur und eine akustische Wamanzeige aufweist.

16. Elektronische Einrichtung nach einem der Ansprüche 8 bis 15, dadurch gekennzeichnet, daß sie eine autonome Spannungsquelle aufweist.

17. Elektronische Einrichtung nach einem der Ansprüche 8 bis 16, gekennzeichnet durch ein Sicherheitssystem zum Verhindern der Manipulation der Einrichtung durch Unbefugte.

18. Elektronische Einrichtung nach einem der Ansprüche 8 bis 17, gekennzeichnet durch Komponenten für die wechselseitige Kommunikation mit einem externen System und durch Komponenten für die Übernahme zusätzlicher Funktionen wie Übewachung der Wartung des Fahrzeugs, Sammeln von Daten für den Fahrzeughersteller, Überwachung von Ratenzahlungen, automatische Identifikation von Fahrzeugen, Übermittlung von Mitteilungen an in Fahrt befindliche Fahrzeuge und Zugriff zu topografischen und/oder touristischen Informationen.

## Claims

1. A method of assessing the operating risk of individual motor vehicles as a basis for the calculation of the insurance premiums of individual insured parties by an insurance company as a function of the risks taken by a respective insured party, for the implementation of which the individual vehicle is provided with devices for the acquisition and pre-processing of data coming from the vehicle itself and from its environment, and this data is collected and processed in order to assess the risks taken over a given period of time and calculate the insurance premium due as a function of risk, characterised in that:
a) an arrangement of accelerometers is used for the acquisition of data in respect of acceleration of the vehicle in all three dimensions;
b) the speed of the vehicle is detected by means of a speed sensor;
c) the acquired acceleration and speed data is analysed together with data obtained from an internal clock and calendar function of the information system in order to determine and assess the risk on the basis of the style of driving practised, the duration and the time of the journeys, and
d) the acquired and collected data is transmitted to an external system and the program stored in the vehicle is simultaneously updated.

2. A method according to claim 1, characterised in that at least one of the following types of data is acquired:
e1) use of the safety belt;
e2) tyre pressure;
e3) distance from the vehicle in front;
e4) period of time during which the vehicle is or was running;
e5) fixed speed limits;
e6) roadworks warning signs;
e7) presence of icy conditions;
e8) traffic congestion;
e9) number of seats occupied;
e10) overall weight of the vehicle;
e11) state of the active security systems of the vehicle;
e12) maintenance level of the vehicle.

3. A method according to either one of the preceding claims, characterised in that a breath test and/or a reflex test is/are required.

4. A method according to any one of the preceding claims, characterised by the use of devices which allow two-way communication between the information system of the vehicle and the driver thereof so that the information system can warn the driver of identified dangers and the driver can supply the information system with data, e.g. in respect of his identity.

5. A method according to any one of the preceding claims, characterised in that there is an exchange of data with maintenance devices for the vehicle.

6. A method according to any one of the preceding claims, characterised in that, in the area of filling stations, service stations or the like, wireless data exchange takes place between the information system of the vehicle and an external system in a form which is recognisable to the user.

7. A method according to any one of the preceding claims, characterised in that electromagnetic communication takes place by means of active and passive signal devices in the region of the roadway so that adaptation of driving style to signals from these signal devices can be taken into consideration in the assessment of risk.

8. An electronic system for assessment the operating risk of individual motor vehicles, comprising a data-exchange network for the exchange of information between a central system and a terminal arranged in the respective vehicle, the terminal forming part of an information system for the acquisition and pre- processing of data coming from the vehicle itself and from its environment in order to assess the risks taken over a given period of time as a basis for the calculation of an insurance premium as a function of risk, characterised in that the electronic system comprises:
a') an arrangement of accelerometers for the acquisition of data in respect of acceleration of the vehicle in all three dimensions;
b') a sensor for detecting the speed of the vehicle;
c') devices for analysing the acquired acceleration and speed data in conjunction with data obtained from an internal clock and calendar function of the information system in order to determine and assess the risk on the basis of the style of driving practised, the duration and the time of the journeys, and
d') communication devices arranged and formed in such a manner that the collected data can be transmitted to an external system and the program stored in the vehicle can simultaneously be updated.

9. An electronic system according to claim 8, characterised in that it comprises components for the acquisition of at least one of the following types of data:
e1) use of the safety belt;
e2) tyre pressure;
e3) distance from the vehicle in front;
e4) period of time during which the vehicle was running;
e5) fixed speed limits;
e6) roadworks warning signs;
e7) presence of icy conditions;
e8) traffic congestion;
e9) number of seats occupied;
e10) overall weight of the vehicle;
e11) state of the active security systems of the vehicle;
e12) maintenance level of the vehicle.

10. An electronic system according to claim 8 and/or 9, characterised in that it comprises components for demanding a breath test and/or a reflex test.

11. An electronic system according to any one of claims 8 to 10, characterised by components for two-way commmunication between the information system of the vehicle and the driver of the vehicle, by means of which a warning of identified dangers can be transmitted from the information system to the driver, and the driver can supply the information system with data, e.g. in respect of his identity.

12. An electronic system according to any one of claims 8 to 11, characterised by components for data exchange with maintenance devices for the vehicle.

13. An electronic system according to any one of claims 8 to 12, characterised by components for wireless communication between the information system of the vehicle and an external system.

14. An electronic system according to any one of claims 8 to 13, characterised by components for electromagnetic communication by means of active and passive signal devices in the region of the roadway for taking adaptation of driving style to signals received from these signal devices into consideration in the assessment of risk.

15. An electronic system according to any one of claims 8 to 14, characterised in that the information system of the vehicle comprises a display, a keyboard and an acoustic warning indicator as peripheral components for communication with the driver.

16. An electronic system according to any one of claims 8 to 15, characterised in that it has a self-contained voltage source.

17. An electronic system according to any one of claims 8 to 16, characterised by a security system for preventing manipulation of the system by unauthorised persons.

18. An electronic system according to any one of claims 8 to 17, characterised by components for two-way communication with an external system and by components for assuming additional functions such as monitoring the maintenance level of the vehicle, collection of data for the vehicle manufacturer, monitoring of payments of instalments, automatic identification of vehicles, transmission of communications to moving vehicles and access to topographical and/or tourist information.

## Revendications

1. Procédé pour évaluer le risque d'utilisation de véhicules automobiles individuels en tant que base pour le calcul des primes d'assurance d'assurés individuels par une société d'assurance en fonction des risques encourus par un assuré respectif, procédé pour la mise en oeuvre duquel le véhicule individuel est équipé de dispositifs pour la détection et le traitement préalable de données, qui proviennent du véhicule lui-même et de son environnement, et ces données sont rassemblées et traitées pour l'évaluation des risques encourus pendant un intervalle de temps donné et le calcul de la prime d'assurance afférente en fonction du risque, caractérisé en ce
a) qu'on utilise un ensemble de capteurs d'accélération pour détecter des données concernant des accélérations du véhicule dans les trois dimensions,
b) qu'on détecte la vitesse du véhicule à l'aide d'un capteur de vitesse,
c) qu'on analyse les données acquises d'accélération et de vitesse ainsi que des données obtenues à partir d'une fonction interne d'horloge ou de calendrier du système de traitement d'informations, pour la détermination et l'évaluation du risque en fonction du mode de conduite pratiqué, de la durée et de l'intant précis de l'heure des déplacements, et
d) que les données détectées et collectées sont transmises à un système externe et que le programme mémorisé dans le véhicule est actualisé au même instant.

2. Procédé selon la revendication 1, caractérisé en ce qu'on détecte au moins l'une des données suivantes:
e1) l'utilisation de la ceinture de sécurité;
e2) la pression des pneumatiques;
e3) la distance par rapport au véhicule précédent;
e4) l'intervalle de temps, pendant lequel le véhicule marche ou a fonctionné;
e5) des limitations fixes de vitesse;
e6) des affichages d'avertissement de chantiers;
e7) l'apparition de glace;
e8) l'accumulation de trafic;
e9) le nombre des places assises occupées;
e10) le poids total du véhicule;
e11) l'état des systèmes actifs de sécurité du véhicule;
e12) l'état d'entretien du véhicule.

3. Procédé selon l'une des revendications précédentes, caractérisé en ce qu'un alcootest et/ou un contrôle des réflexes est ou sont requis.

4. Procédé selon l'une des revendications précédentes, caractérisé par l'utilisation de dispositifs, qui permettent une communication dans les deux directions entre le système de traitement d'informations du véhicule et le conducteur lui-même, de sorte que le système de traitement d'informations peut avertir le conducteur de dangers identifiés et que le système de traitement d'informations peut être alimenté par le conducteur avec des données, par exemple concernant son identité.

5. Procédé selon l'une des revendications précédentes, caractérisé en ce qu'on prévoit un échange de données avec des dispositifs d'avertissement pour le véhicule.

6. Procédé selon l'une des revendications précédentes, caractérisé en ce qu'un échange de données sans fil est exécuté entre le système de traitement d'informations du véhicule et le système externe sous une forme identifiable par l'utilisateur, au niveau de postes d'essence, de stations-service ou analogues.

7. Procédé selon l'une des revendications précédentes, caractérisé en ce qu'une communication électromagnétique avec des dispositifs actifs et passifs de transmission de signaux est exécutée au niveau de la route de sorte que lors de l'évaluation du risque, l'adaptation du mode de conduite à des signaux de tels dispositifs de transmission de signaux peut être prise en compte.

8. Dispositif électronique pour l'évaluation du risque de fonctionnement de véhicules automobiles individuels, comportant un réseau d'échange de données pour l'échange d'informations entre un système central et un terminal disposé dans le véhicule respectif, qui fait partie d'un système de traitement d'informations servant à la détection et au prétraitement d'informations provenant du véhicule lui-même et de son environnement, pour le calcul du risque encouru pendant un intervalle de temps donné, en tant que base pour le calcul d'une prime d'assurance en fonction du risque, caractérisé en ce que le dispositif électronique comporte
a') un ensemble d'accéléromètres servant à détecter des données concernant des accélérations du véhicule dans les trois dimensions,
b') un capteur pour détecter la vitesse du véhicule,
c') des dispositifs pour analyser les valeurs détectées d'accélération et de vitesse en liaison avec des données obtenues à partir d'une fonction interne d'horloge et de calendrier du système de traitement d'informations pour la détection et l'évaluation du risque sur la base de la conduite pratiquée, de l'instant précis et de l'heure des déplacements effectués, et
d') des dispositifs de communication, qui sont disposés et agencés de telle sorte que de ce fait la transmission de l'ensemble de données à un système externe et simultanément une actualisation du programme mémorisée dans le véhicule peuvent être exécutées.

9. Dispositif selon la revendication 8, caractérisé en ce qu'il comporte des composants pour détecter au moins l'une des données suivantes:
e1) l'utilisation de la ceinture de sécurité;
e2) la pression des pneumatiques;
e3) la distance par rapport au véhicule précédent;
e4) l'intervalle de temps, pendant lequel le véhicule marche ou a fonctionné;
e5) des limitations fixes de vitesse;
e6) des affichages d'avertissement de chantiers;
e7) l'apparition de glace;
e8) l'accumulation de trafic;
e9) le nombre des places assises occupées;
e10) le poids total du véhicule;
e11) l'état des systèmes actifs de sécurité du véhicule;
e12) l'état d'entretien du véhicule.

10. Dispositif électronique selon la revendication 8 et/ou 9, caractérisé en ce qu'il comporte des composants pour demander un alcotest et/ou un contrôle des réflexes.

11. Dispositif électronique selon la revendication 8 à 10, caractérisé par des composants pour la communication réciproque entre le système de traitement d'informations du véhicule et le conducteur du véhicule, au moyen desquels un avertissement concernant des dangers identifiés peut être délivré au conducteur par le système de traitement d'informations, et des données, par exemple concernant l'identité du conducteur, peuvent être introduites par ce dernier dans le système de traitement d'informations.

12. Dispositif électronique selon l'une des revendications 8 à 11, caractérisé par des composants servant à réaliser l'échange de données avec des dispositifs d'entretien pour le véhicule.

13. Dispositif électronique selon l'une des revendications 8 à 12, caractérisé en ce par des composants pour la communication sans fil entre le système de traitement d'informations du véhicule et un système externe.

14. Dispositif électronique selon l'une des revendications 8 à 13, caractérisé par des composants pour la communication électronique avec des dispositifs actifs et passifs de transmission de signaux, au niveau de la route et par conséquent pour la prise en compte de l'adaptation du type de conduite à des signaux reçus de tels dispositifs de transmission de signaux, lors du calcul du risque.

15. Dispositif électronique selon l'une des revendications 8 à 14, caractérisé en ce que le système de traitement d'informations du véhicule comporte, en tant que composants périphériques pour la communication avec le conducteur, un panneau d'affichage, un clavier et un dispositif d'avertissement acoustique.

16. Dispositif électronique selon l'une des revendications 8 à 15, caractérisé en ce qu'il possède une source de tension autonome.

17. Dispositif électronique selon l'une des revendications 8 à 16, caractérisé par un système de sécurité servant à empêcher la manipulation du dispositif par des personnes non autorisées.

18. Dispositif électronique selon l'une des revendications 8 à 17, caractérisé par des composants pour la communication réciproque avec un système externe, et par des composants pour la prise en charge de fonctions supplémentaires, telles que le contrôle de l'entretien du véhicule, la collecte de données pour le fabricant du véhicule, le contrôle de statistiques, l'identification de véhicules, le transfert de communications à des véhicules en train de se déplacer et l'accès à des informations topographiques et/ou touristiques.
